# DEMANDE DE BREVET EUROPEEN

(11) **EP 4 414 216 A1**
(43) Date de publication de la demande: **14.08.2024**
(21) Numéro de dépôt: 24156756.9
(22) Date de dépôt: 09.02.2024
(51) Int. Cl.: B60Q 1/02, B60R 19/52

(54) **PANNEAU D'HABILLAGE POUR VÉHICULE AUTOMOBILE COMPRENANT UNE ZONE DE TRANSMISSION DE LUMIÈRE ET UNE ZONE DE MASQUAGE**

(30) Priorité: 10.02.2023 FR 2301250
(71) Demandeur: OPmobility SE, 69007 Lyon (FR)
(72) Inventeur: MOULIN, Gilles, 01150 SAINTE-JULIE (FR)
(74) Mandataire: LLR

(57) **Abrégé**

Le panneau d'habillage (6) pour véhicule automobile (1), comprend :
- au moins une zone de transmission de lumière (7), réalisée en un premier matériau plastique apte à permettre une transmission lumineuse,
- au moins une zone de masquage (8) contiguë à la zone de transmission (7) et réalisée au moins en partie en un deuxième matériau plastique plus souple que le premier matériau.

## Description

### Domaine technique de l'invention

L'invention concerne un panneau d'habillage pour véhicule automobile, ainsi qu'un module d'habillage, une face avant de véhicule automobile ou un véhicule automobile comprenant un tel panneau d'habillage.

### Arrière-plan technique

On connaît déjà dans l'état la technique un véhicule automobile comprenant une face avant comprenant notamment un module d'habillage pouvant intégrer des fonctionnalités techniques, telles que des capteurs ou des organes de signalisation, et des fonctionnalités esthétiques, telles que des organes de diffusion de motifs lumineux. Un tel module d'habillage présente une forte valeur ajoutée, est couteux à fabriquer et fragile. L'agencement du module d'habillage dans la face avant entraine une exposition importante de celui-ci à des risques d'endommagement, par exemple lors d'un choc subi à l'avant du véhicule. Plus précisément, le module d'habillage comprend un panneau d'habillage formant une surface externe visible depuis l'extérieur lorsque le module d'habillage est monté sur le véhicule, ce panneau d'habillage, qui est coûteux et complexe à produire, est ainsi particulièrement exposé aux chocs.

Le panneau d'habillage comprend classiquement au moins une zone de transmission de lumière, réalisée en un premier matériau apte à permettre une transmission de lumière et au moins une zone de masquage contiguë à la zone de transmission, la zone de masquage étant généralement opaque à la lumière visible ou semi-transparente. La zone de transmission de lumière permet notamment le passage de la lumière depuis l'intérieur du module d'habillage vers l'extérieur afin, par exemple, de transmettre un signal lumineux, d'éclairer la route ou de faire apparaitre des éléments de décoration. La zone de masquage permet, elle, de dissimuler des éléments techniques, tels que des capteurs, des interfaces de fixation ou des éléments d'étanchéité, afin d'améliorer l'aspect esthétique du véhicule. Classiquement, le panneau d'habillage est formé d'au moins une pièce réalisée en un matériau transparent, par exemple du polycarbonate transparent à la lumière visible, et d'au moins une autre pièce, réalisée en un même matériau mais opaque, par exemple en polycarbonate opaque, surmoulée sur la première pièce au niveau d'au moins une zone du panneau d'habillage que l'on souhaite rendre opaque.

Ainsi, au niveau d'une zone de masquage, le panneau d'habillage comprend deux couches de matériau, par exemple une couche de polycarbonate transparent et une couche de polycarbonate opaque, et est par conséquent plus rigide qu'au niveau de la zone de transmission de lumière qui ne comprend qu'une couche de matériau, par exemple une couche de polycarbonate transparent. Cette augmentation de rigidité au niveau de la zone de masquage modifie le comportement du panneau d'habillage lors d'un choc en le rendant plus rigide et donc plus fragile et susceptible d'être endommagé, par exemple en étant déformé plastiquement lors d'un choc.

Lors d'un choc à faible vitesse ou un petit choc, tels que les chocs appelés choc « assurance », choc « parking », choc « réparabilité », l'objectif principal est de réduire les coûts de réparation et/ou de protéger l'élément ou les éléments subissant directement ou indirectement le choc. Un choc à faible vitesse ou un petit choc sont des chocs à faible énergie cinétique, inférieure à 1 000 J. Typiquement, un choc « assurance » correspond à un choc à environ 15 km/h contre un mur fixe, tel que celui connu sous le nom de Danner ou encore AZT, ou à environ 8 km/h contre un angle de mur ou contre un poteau. Un choc « parking » est un choc survenant à moins de 8 km/h.

Ainsi, il est particulièrement souhaitable de prévenir ou de limiter l'endommagement du panneau d'habillage, notamment lors d'un choc à faible vitesse ou un petit choc, afin de ne pas avoir à remplacer le panneau d'habillage ou le module d'habillage.

### Résumé de l'invention

L'invention a notamment pour but d'améliorer la tenue mécanique au choc d'un panneau d'habillage, notamment afin de réduire ou empêcher l'endommagement du panneau d'habillage lors d'un choc à faible vitesse ou petit choc.

À cet effet l'invention a pour objet un panneau d'habillage pour véhicule automobile, comprenant :
- au moins une zone de transmission de lumière, réalisée en un premier matériau plastique apte à permettre une transmission lumineuse,
- au moins une zone de masquage contiguë à la zone de transmission de lumière et réalisée au moins en partie en un deuxième matériau plastique plus souple que le premier matériau plastique.

Le fait que le deuxième matériau plastique soit plus souple que le premier matériau plastique permet de diminuer la rigidité du panneau d'habillage par rapport à un panneau d'habillage de l'art antérieur. L'utilisation de ce deuxième matériau permet ainsi d'une part de diminuer la rigidité du panneau d'habillage au niveau de la zone de masquage de sorte que, si un choc survient au niveau de la zone de masquage, le panneau d'habillage est suffisamment souple au niveau de cette zone de masquage pour être déplacé selon une certaine distance sans subir de déformation plastique. L'utilisation de ce deuxième matériau permet d'autre part de rendre le panneau d'habillage dans sa globalité plus souple. Notamment, en cas de choc, la souplesse relative de la zone de masquage autorise une déformation élastique de cette dernière permettant un déplacement de la zone de transmission qui n'est pas possible avec un panneau d'habillage de l'art antérieur qui est particulièrement rigide au niveau de sa zone de masquage. Ce déplacement permet de réduire le risque que le panneau d'habillage soit endommagé en cas de choc, notamment en cas de choc à faible vitesse ou de petit choc.

La zone de transmission de lumière permet la transmission lumineuse d'au moins une partie de la lumière qui la traverse. Selon les modes de réalisation, elle peut être transparente ou translucide. Un élément est qualifié de transparent lorsqu'il se laisse traverser par la lumière dans le domaine du visible. Un élément transparent permet de distinguer les objets nettement à travers son épaisseur. On considère qu'un élément est transparent lorsqu'il présente une transmittance supérieure ou égale à 85 %. Un élément est qualifié de translucide lorsqu'il se laisse traverser par la lumière dans le domaine du visible, mais sans permettre de distinguer nettement les objets. Un élément translucide est un élément au travers duquel on voit flou. On considère qu'un élément ayant une transmittance supérieure ou égale à 50% environ et inférieure à 85 % est translucide. La transmittance ou transmission lumineuse d'un matériau est la fraction du flux lumineux le traversant. Ainsi la transmittance représente le rapport de l'intensité lumineuse transmise par le matériau sur l'intensité lumineuse incidente.

La zone de masquage permet de de dissimuler depuis l'extérieur des éléments techniques, tels que des capteurs, des interfaces de fixation ou des éléments d'étanchéité, afin d'améliorer l'aspect esthétique du véhicule. Selon certains modes de réalisation, la zone de masquage peut être opaque, semi-transparente ou translucide. Un élément est opaque lorsqu'il ne laisse pas passer la lumière visible. Un élément est semi-transparent lorsqu'il permet la transmission de lumière émise par une source de lumière avec une éventuelle absorption partielle de lumière, mais empêche la transmission de la lumière naturelle. Ainsi, une zone de masquage semi-transparente permet à la fois de dissimuler depuis l'extérieur des éléments agencés derrière elle tout en permettant la transmission de lumière vers l'extérieur d'une partie d'une lumière émise par une source de lumière dissimulée derrière la zone de masquage. Dans le mode de réalisation où la zone de masquage est translucide, il est prévu que la transmittance de la zone de masquage reste inférieure à la transmittance de la zone de transmission de lumière.

Les souplesses respectives des premier et deuxième matériaux plastiques peuvent être aisément déterminées par l'homme du métier en utilisant des méthodes de mesure standard permettant de déterminer par exemple le module de Young et/ou la dureté des premier et deuxième matériaux plastiques. On peut, par exemple, réaliser un essai de traction pour mesurer le module de Young ou mesurer la dureté selon une des échelles de dureté de Shore (définies par exemple par la norme ISO 48-4:2018, la norme ASTM D 2240 et la norme DIN 53505). D'autres méthodes bien connues de l'homme du métier pourront bien entendu être utilisée afin de déterminer la souplesse relative entre le premier et le deuxième matériaux plastiques.

Selon les modes de réalisation, le panneau d'habillage peut comprendre plusieurs zones de transmission de lumière et/ou plusieurs zones de masquage.

L'invention peut comporter l'une ou plusieurs des caractéristiques optionnelles suivantes, prises seules ou en combinaison :
Le deuxième matériau plastique est opaque à la lumière visible.

Le deuxième matériau plastique est semi-transparent.

Le deuxième matériau plastique est translucide, la transmittance lumineuse du deuxième matériau plastique étant inférieure à la transmittance lumineuse du premier matériau plastique.

La zone de masquage est plus souple que la zone de transmission de lumière.

La zone de masquage est réalisée entièrement à partir du deuxième matériau plastique.

La zone de masquage est formée d'au moins deux couches de matériaux :
- une première couche réalisée à partir du premier matériau plastique et située au moins sur une face externe du panneau d'habillage, et
- une deuxième couche réalisée à partir du deuxième matériau et située au moins sur une face interne du panneau d'habillage.

La première couche est venue de matière avec le premier matériau plastique formant la zone de transmission de lumière.

La première couche présente au moins un évidement diminuant localement l'épaisseur de la première couche, au moins une partie de la deuxième couche étant agencée dans cet évidement.

La zone de masquage s'étend sur tout le pourtour de la zone de transmission de lumière.

Le panneau d'habillage forme un boitier, au moins une partie de la zone de masquage formant au moins une des parois latérales du boitier et la zone de transmission de lumière formant au moins une partie d'un fond du boitier.

Au moins une partie de la zone de masquage sépare deux zones de transmission de lumière.

Le premier matériau plastique est 5 à 15 fois plus souple que le deuxième matériau plastique.

L'invention a également pour objet un module d'habillage comprenant un panneau d'habillage tel que décrit précédemment.

L'invention a en outre pour objet une face avant de véhicule automobile comprenant un panneau d'habillage tel que décrit précédemment.

Par ailleurs, on peut prévoir que le panneau d'habillage selon l'invention soit compris dans un hayon de véhicule automobile.

Enfin, l'invention a aussi pour objet un véhicule automobile comprenant un panneau d'habillage tel que décrit précédemment.

### Brève description des figures

L'invention sera mieux comprise à la lecture de la description qui va suivre donnée uniquement à titre d'exemples non limitatifs et faite en se référant aux dessins annexés dans lesquels :
[Fig. 1] est une représentation schématique en perspective d'une partie avant d'un véhicule automobile comprenant module d'habillage comprenant un panneau d'habillage selon un premier mode de réalisation de l'invention ;
[Fig. 2] est une représentation schématique en perspective similaire à la figure 1 d'un véhicule automobile comprenant un module d'habillage comprenant un panneau d'habillage selon un deuxième mode de réalisation de l'invention ;
[Fig. 3] est une représentation schématique en perspective du panneau d'habillage de la figure 1 ;
[Fig. 4] est une représentation schématique en perspective agrandie du cercle C1représenté sur la figure 3 ;
[Fig. 5] est une représentation schématique en coupe de plusieurs variantes de réalisation du panneau d'habillage du premier mode de réalisation selon le plan de coupe YY ;
[Fig. 6] est une représentation schématique en perspective d'un panneau d'habillage selon un troisième mode de réalisation de l'invention ;
[Fig. 7] est une représentation schématique en perspective agrandie du cercle C2 représenté sur la figure 6 ; et
[Fig. 8] est une représentation schématique en coupe de plusieurs variantes de réalisation du panneau d'habillage du troisième mode de réalisation selon le plan de coupe ZZ.

### Description détaillée

Dans la description détaillée, la direction longitudinale (ou axe X), la direction transversale (ou axe Y) et la direction verticale (ou axe Z) font référence aux directions d'un véhicule automobile et sont illustrés sur les figures.

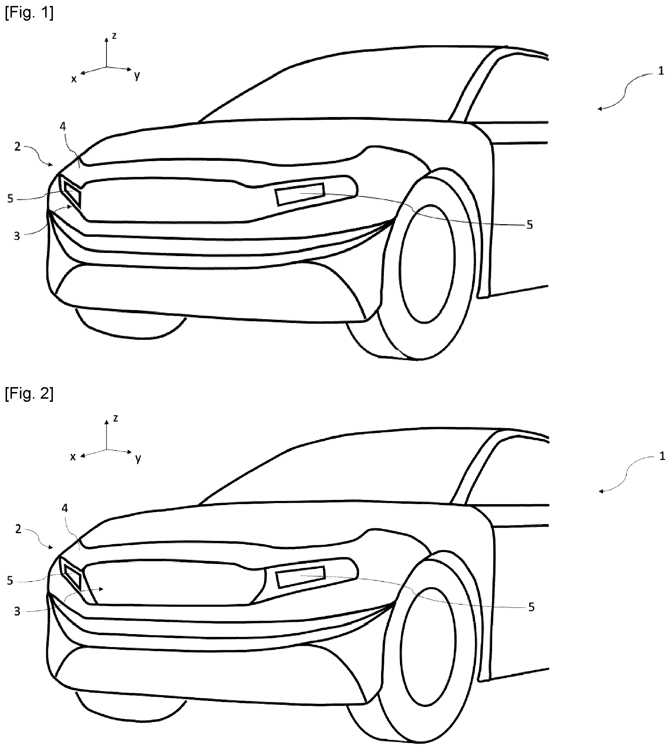

La figure 1 montre la partie avant d'un véhicule automobile 1 qui comprend une face avant 2 comprenant un module d'habillage 3. Selon l'invention, on entend par « face avant » la ou les pièces du véhicule automobile 1 délimitant une surface externe visible depuis l'extérieur à l'avant du véhicule automobile 1.

La face avant 2 comprend au moins un panneau principal 4 réalisé en matière plastique. Ce panneau principal 4 présente un orifice central dans lequel sont montés le module d'habillage 3 et des unités optiques 5 (figure 1). Dans le cas présent, les deux unités optiques 5 sont intégrées dans le module d'habillage 3 et sont agencées respectivement au niveau de deux extrémités latérales opposées du module d'habillage 3. Cette intégration des unités optiques 5 dans le module d'habillage 3 permet de faciliter le montage de la face avant 2 sur le véhicule automobile 1 et d'améliorer l'esthétisme du véhicule 1 en permettant, par exemple, d'obtenir une continuité de forme entre le module d'habillage 3 et les unités optiques 5.

Le module d'habillage 3 est agencé de manière à ce que sa surface externe soit affleurante à la surface externe du panneau principal 4. La surface externe du module d'habillage 3 et la surface externe du panneau principal 4 sont ainsi en continuité de forme afin de créer un effet donnant l'illusion que la face avant 2 est d'un seul tenant. De manière générale, le module d'habillage 3 est de préférence agencé de manière à ce que sa surface externe soit affleurante avec tout élément de carrosserie situé à proximité immédiate du module d'habillage 3.

Selon un deuxième mode de réalisation représenté à la figure 2, la face avant 2 diffère en ce que les unités optiques 5 ne sont pas intégrées au module d'habillage 3. Les unités optiques 5 conservent la même position sur le véhicule 1 que dans le premier mode de réalisation de sorte que le module d'habillage 3, agencé entre ces unités optiques 5, est moins long que dans le premier mode de réalisation.

Dans le premier mode de réalisation, le module d'habillage 3 a une forme générale allongée s'étendant sur plus de 50 % de la largeur de la face avant 2. Plus particulièrement, dans le cas présent, le module d'habillage 3 s'étend sur environ 90 % de la largeur - c'est-à-dire la dimension suivant l'axe transversal Y- de la face avant 2. Bien entendu, selon des variantes de réalisation, le module d'habillage peut s'étendre sur moins de 50 % ou plus de 90 % de la face avant 2. Le module d'habillage 3 est destiné à être fixé sur une structure support du véhicule automobile 1, par exemple sur la caisse du véhicule automobile 1 ou sur une face avant technique du véhicule 1.

Le module d'habillage 3 comprend un organe de diffusion d'ondes électromagnétiques. Dans le cas présent, cet organe de diffusion d'ondes électromagnétiques est apte à émettre des ondes électromagnétiques dans le spectre visible, communément appelées lumière visible par la suite. Cet organe de diffusion comprend par exemple un guide de lumière couplé à un émetteur de lumière (non représentés). Selon d'autres modes de réalisation, l'organe de diffusion d'ondes électromagnétiques est apte à émettre d'autres types d'ondes électromagnétiques, par exemple des ondes infrarouges ou des ondes radioélectriques. On peut prévoir que le module d'habillage 3 comprend plusieurs organes de diffusion d'ondes électromagnétiques, chaque organe étant apte à diffuser un ou plusieurs types d'ondes électromagnétiques.

Le module d'habillage 3 comprend en outre un panneau d'habillage 6 formant la surface externe du module d'habillage 3 visible depuis l'extérieur. Le panneau d'habillage 6 forme avec un corps principal (non représenté) du module d'habillage 3 un boitier contenant les différents composants techniques du module d'habillage 3, tels qu'un organe de diffusion d'ondes électromagnétiques, un guide de lumière ou un capteur.

Le panneau d'habillage 6 comprend au moins une zone de transmission de lumière 7, réalisée en un premier matériau plastique apte à permettre une transmission lumineuse. Un tel matériau est par exemple un matériau transparent ou translucide. En particulier, ce premier matériau peut être du polycarbonate (PC) transparent à la lumière visible. D'autres matériaux transparents ou translucide à la lumière visible et connus de l'homme du métier peuvent être utilisés selon d'autres modes de réalisation. Ces matériaux sont par exemple choisis parmi des matériaux plastiques transparents ou translucides tels que le polypropylène, du polytéréphtalate d'éthylène (PET), le polyméthacrylate de méthyle (PMMA selon son sigle abrégé en anglais), l'acrylonitrile butadiène styrène (ABS), un mélange de polycarbonate et d'acrylonitrile butadiène styrène (PC/ABS), le polyuréthane (PU), un copolymère oléfine cyclique (COC), ou un polymère oléfine cyclique (COP selon son sigle abrégé en anglais).

Selon ce premier mode de réalisation, le panneau d'habillage 6 comprend une unique zone de transmission de lumière 7. Selon d'autres modes de réalisation, le panneau d'habillage 6 peut comprendre un nombre supérieur de zone de transmission de lumière 7, par exemple entre deux et vingt, de préférence entre deux et dix. Dans le cas présent, la zone de transmission de lumière 7 occupe une plus grande partie de la surface externe du panneau d'habillage 6 et donc du module d'habillage 3. La zone de transmission de lumière 7 permet notamment le passage de la lumière visible depuis l'intérieur du module d'habillage 3 vers l'extérieur afin, par exemple, de transmettre un signal lumineux, d'éclairer la route ou de faire apparaitre des éléments de décoration. Notamment, dans le cas présent où le module d'habillage 3 comprend les unités optiques 5, la zone de transmission de lumière 7 permet le passage de la lumière visible émise par ces unités optiques 5.

Le panneau d'habillage 6 comprend en outre une zone de masquage 8 contiguë à la zone de transmission de lumière 7 et réalisée en un deuxième matériau plastique plus souple que le premier matériau plastique. Dans le cas présent, la zone de masquage 8 est opaque à la lumière visible. Selon une variante de réalisation, on peut prévoir que la zone de masquage est semi-transparente ou translucide.

Le deuxième matériau est par exemple choisi parmi les élastomères thermoplastiques (TPE) opaques, semi-transparents ou translucides, tel que des TPE à base de copolymères blocs styréniques (TPS) par exemple des TPS sous forme saturées, typiquement du polystyrène-b-polyéthylène-butylène-b-polystyrène (SEBS), ou les polyuréthanes thermoplastiques opaques, semi-transparents ou translucides. On remarque que le polycarbonate transparent a un module de Young important, de l'ordre de 2 100 à 2 500 MPa, bien supérieur au module de Young d'un élastomère thermoplastique opaque, semi-transparent ou translucide ou d'un polyuréthane thermoplastique opaque, semi-transparent ou translucide. La zone de masquage 8 permet notamment de dissimuler des éléments techniques, tels que des interfaces de fixation, des parois techniques, des capteurs ou des éléments d'étanchéité, afin d'améliorer l'aspect esthétique du véhicule. Classiquement, le matériau utilisé dans l'art antérieur pour conférer l'opacité à la lumière visible de la zone de masquage 8 était un matériau identique à celui utilisé pour réaliser la zone de transmission de lumière afin notamment de faciliter le procédé de fabrication par moulage. Par exemple, on surmoulait du polycarbonate opaque sur du polycarbonate transparent afin d'obtenir la zone de masquage 8. Il en résultait que la zone de masquage comprenait une épaisseur plus importante de polycarbonate, rigidifiant cette zone de masquage 8 ainsi que le panneau d'habillage 6 dans son ensemble. Une telle rigidification engendrait une moins bonne tenue mécanique aux chocs. L'utilisation d'un deuxième matériau plastique plus souple que le premier matériau plastique permet de diminuer la rigidité de la zone de masquage 8 mais également celle du panneau d'habillage 6 dans son ensemble et donc d'améliorer la tenue mécanique au choc du panneau d'habillage 6 - et donc du module d'habillage 3. En particulier, en cas de choc au niveau de la zone de transmission de lumière 7, la zone de masquage 8 qui est contiguë à cette zone de transmission, du fait de sa plus grande souplesse, se déforme plus facilement et permet un déplacement de la zone de transmission de lumière 7 permettant de réduire les conséquences du choc sur cette zone du panneau d'habillage 6. Sur les figures 1 et 2, le module d'habillage 3 est représenté de manière schématique. On remarque notamment que la zone de masquage 8 n'est pas représentée.

Selon d'autres modes de réalisation, le panneau d'habillage 6 peut comprendre un nombre supérieur de zones de masquage 8, par exemple entre deux et vingt, de préférence entre deux et dix.

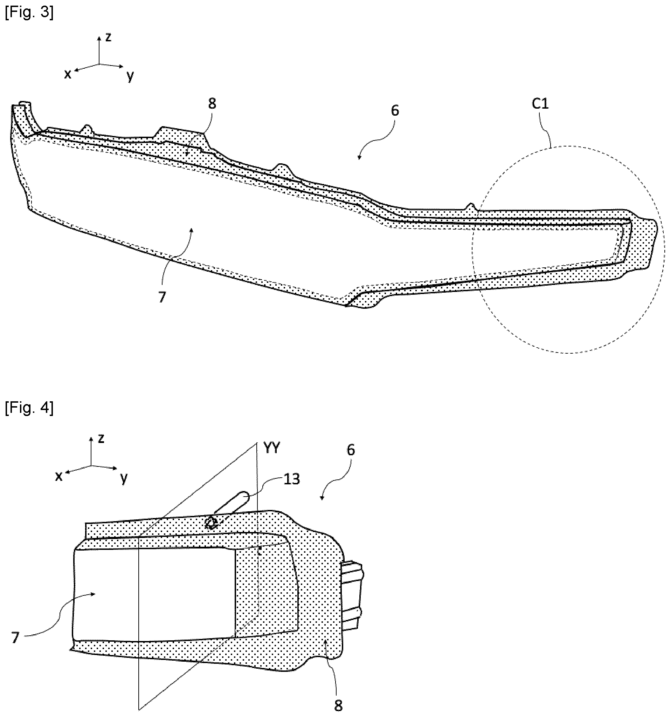

Comme représenté à la figure 3, la zone de masquage 8 s'étend sur tout le pourtour de la zone de transmission de lumière 7. On augmente ainsi encore plus la souplesse de la zone de masquage 8 et donc la souplesse du panneau d'habillage 6, quelle que soit la zone d'impact lors d'un éventuel choc. Dans le cas où le panneau d'habillage 6 comprend plusieurs zones de transmission de lumière 7, on peut prévoir qu'une zone de masquage 8 s'étende sur tout le pourtour de chaque zone de transmission de lumière 7.

Selon le premier mode de réalisation, le panneau d'habillage 6 a une forme générale de boitier (figures 3 et 4), la zone de masquage 8 formant les quatre parois latérales du boitier, la zone de transmission de lumière 7 formant avec une partie de la zone de masquage 8 le fond du boitier. Dans cette configuration, le fond du boitier, qui forme la surface externe visible du module d'habillage 3, est particulièrement vulnérable aux chocs. Notamment, dans cette configuration les parois latérales du boitier, de par leurs positions, augmentent la rigidité du fond de la paroi (appelé parfois « effet de boite »). Ainsi, l'utilisation d'un deuxième matériau plastique plus souple pour réaliser les zones de masquage 8 et donc les parois latérales du boitier permet d'atténuer cette augmentation de la rigidité du fond de la boite obtenue par effet de boite et donc d'améliorer la tenue mécanique au choc du panneau d'habillage 6.

Sur les figures 3, 4, 6 et 7, la ou les zones de masquage 8 sont représentées en pointillés afin de représenter leurs opacités.

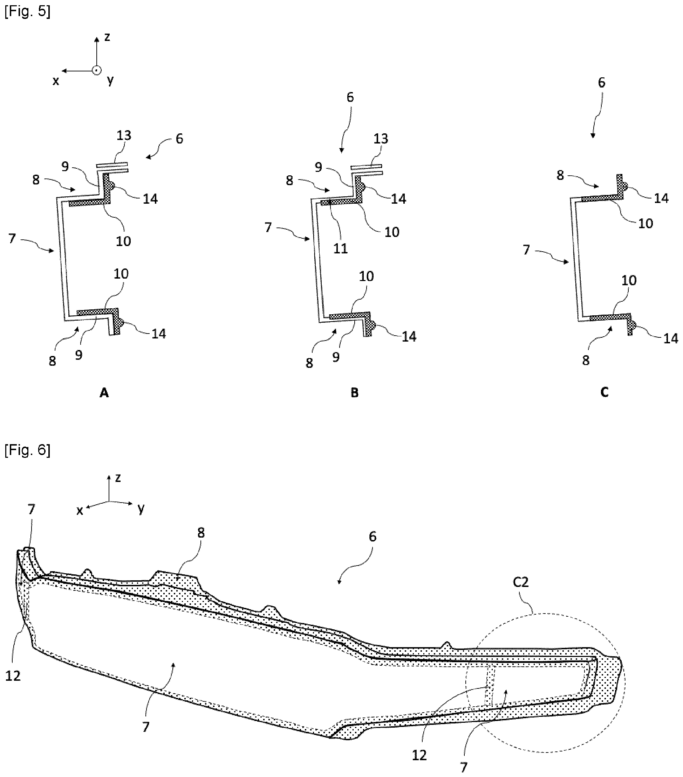

La figure 5 représente plusieurs variantes de réalisation d'une coupe verticale suivant le plan de coupe YY représentée sur la figure 4. La différence entre ces différentes variantes de réalisation concerne les éléments formant la zone de masquage 8.

Comme cela est visible sur les figures 4 et 5, le panneau d'habillage 6 comprend au moins un fût de vissage 13 par lequel le panneau d'habillage 6 peut par exemple être fixé par vissage au corps principal du module d'habillage 3. De préférence, ce fût de vissage 3 est formé par une excroissance creuse s'étendant en arrière de la couche externe 9 de la zone de masquage 8 et venant, de préférence, de matière lors du moulage du premier matériau transparent ou translucide. On peut prévoir que le panneau d'habillage 6 soit fixé différemment sur le corps principal du module d'habillage 3, par exemple par clipsage ou par collage.

Selon une première variante de réalisation représentée à la figure 5A, la zone de masquage 8 est formée de deux couches de matériaux d'épaisseurs sensiblement équivalentes :
- une première couche 9 réalisée à partir du premier matériau plastique et située sur la face externe du panneau, et
- une deuxième couche 10 réalisée à partir du deuxième matériau plastique et située sur la face interne du panneau.

Comme expliqué précédemment, cette variante de réalisation est avantageuse en ce que la deuxième couche est plus souple que la première couche. Ainsi, par rapport à un panneau d'habillage de l'art antérieur pour lequel cette partie est réalisée en utilisant pour les deux couches des matériaux présentant une dureté importante (par exemple deux couches de polycarbonate, transparent et opaque), la zone de masque 8 est plus souple, ce qui améliore la tenue mécanique aux chocs du panneau d'habillage 6. Par ailleurs, cette variante de réalisation est particulièrement simple à mettre en oeuvre.

Comme cela est visible sur la figure 5A, la première couche 9 de la zone de masquage 8 est venue de matière avec le matériau formant la zone de transmission de lumière 7. Plus particulièrement, la première couche 9 de la zone de masquage 8 est réalisée avec le même premier matériau que celui utilisé pour réaliser la zone de transmission de lumière 7. Le procédé de fabrication du panneau d'habillage 6 est ainsi facilité. En effet, on peut prévoir de former dans un premier temps, par exemple par moulage d'une matière thermoplastique telle que du polycarbonate transparent à la lumière visible, une pièce dont une partie est destinée à former la zone de transmission de lumière 7 et une partie est destinée à former la zone de masquage 8. Pour la réalisation la zone de masquage 8, on surmoule la partie destinée à former la zone de masquage 8 avec le deuxième matériau, par exemple un élastomère thermoplastique opaque, semi-transparent ou translucide, afin de réaliser la deuxième couche 10 de la zone de masquage 8 du panneau d'habillage 6. On comprend que c'est la deuxième couche 10 opaque, semi-transparente ou translucide qui permet ici de délimiter la zone de transmission 7 de lumière de la zone de masquage 8. Par ailleurs, lors d'un tel procédé de fabrication par moulage de matière thermoplastique, on remarque que l'utilisation d'un deuxième matériau plus souple que le premier matériau permet de diminuer l'effet thermique de bi-lame pendant le moulage, améliorant ainsi la précision et la reproductibilité de la géométrie de la pièce. En effet, le deuxième matériau souple exerce une force moins importante lors de sa rétractation lors du refroidissement au cours du procédé de moulage, ce qui évite ou réduit la déformation du premier matériau déjà moulé auquel il adhère. Cette diminution de l'effet bi-lame est d'autant plus avantageuse que cet effet est plus important sur des pièces de grandes dimensions, notamment sur des grandes pièces allongées, comme cela est le cas pour le panneau d'habillage 6 selon l'invention.

La deuxième couche 10 comprend un bourrelet 14 destiné à être plaqué avec un écrasement partiel ou à s'insérer dans une rainure d'un autre élément du module d'habillage 3 3. Il est ainsi possible réaliser de manière simple l'étanchéité de l'intérieur du module d'habillage sans avoir à ajouter un joint d'étanchéité ou à recourir à un collage permettant à la fois la réalisation de la fixation et de l'étanchéité. Selon les modes de réalisation, on peut toutefois prévoir qu'un cordon de colle soit déposé afin d'assurer à la fois l'étanchéité et le maintien du panneau d'habillage 6 sur le corps principal du module d'habillage 3.

La deuxième variante de réalisation représentée à la figure 5B diffère de la première variante uniquement en ce que la première couche 9 présente au moins un évidement 11 diminuant localement l'épaisseur de la couche externe 9, au moins une partie de la deuxième couche 10 étant agencée dans cet évidement 11. Dans le cas présent, cet évidement 11 est situé dans le plan de la coupe YY. Cet évidement 11 permet de diminuer localement la rigidité de la zone de masquage 8.

La troisième variante de réalisation représenté à la figure 5C diffère de la première variante en ce que la zone de masquage est réalisée entièrement à partir du deuxième matériau. Autrement dit, par rapport à la première variante de réalisation, la zone de masquage 8 ne comprenant pas la première couche 9 mais uniquement la deuxième couche 10. Cette configuration augmente de façon très nette la souplesse de la zone de masquage 8 de sorte que la zone de masquage 8 est plus souple que la zone de transmission de lumière 7. Cette souplesse de la zone de masquage 8 permet de diminuer la rigidité d'ensemble du panneau d'habillage 6 de sorte que la tenue mécanique aux chocs du panneau d'habillage 6, et donc du module d'habillage 3, est améliorée. Dans cette variante de réalisation, on remarque que le fût de vissage 13 n'est pas présent dans la coupe. Cela est dû au fait qu'il est préférable que le fût de vissage soit réalisé en un matériau plus rigide que le deuxième matériau utilisé pour réaliser la deuxième couche 10. Ainsi, le panneau d'habillage 6 peut comprendre des fûts de vissage 13 disposés ailleurs sur le panneau d'habillage 6. On peut également prévoir que le panneau d'habillage 6 soit fixé au corps principal du module d'habillage 3 sans utiliser de fût de vissage 13.

Selon encore d'autres variantes de réalisation, il est possible de prévoir que la zone de masquage 8 est plus souple que la zone de transmission sans pour autant prévoir que la zone de masquage 8 soit réalisée entièrement à partir du deuxième matériau.

On comprend qu'un même panneau d'habillage 6 peut mettre en oeuvre plusieurs des variantes de réalisation décrites ci-dessous en fonction de la section considérée.

La figure 6 représente un troisième mode de réalisation du panneau d'habillage 6 selon l'invention. Le troisième mode de réalisation diffère du premier mode de réalisation principalement en ce qu'il comprend plusieurs zones de transmission de lumière 7 séparées entre elles par la zone de masquage 8. Plus particulièrement, selon ce mode de réalisation, le panneau d'habillage 6 comprend trois zones de transmission de lumière 7, la zone de masquage 8 s'étendant principalement sur tout le pourtour de chaque zone de transmission de lumière 7 et la zone de masquage 8 présentant aussi deux bretelles de masquage 12 s'étendant chacune sensiblement verticalement depuis une extrémité supérieure de la zone de transmission 7 jusqu'à une extrémité inférieure de la zone de transmission 7 afin de la séparer en trois zones de transmission de lumière 7.

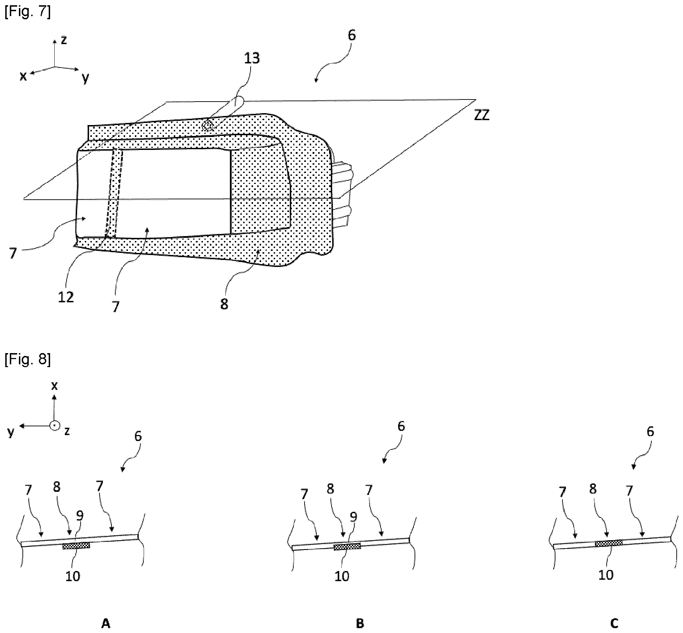

La figure 7 est une vue similaire à celle de la figure 4 appliquée cette fois au troisième mode de réalisation et présentant l'agrandissement du cercle C2 de la figure 6. La figure 8 représente trois variantes de réalisation du troisième mode de réalisation vues en coupe selon le plan de coupe ZZ représenté sur la figure 7. La figure 8 permet notamment de visualiser une coupe du panneau d'habillage 6 au niveau d'une de ses deux bretelles de masquage 12.

La figure 8A représente la première variante de réalisation du troisième mode de réalisation. De manière similaire à la première variante de réalisation du premier mode de réalisation, la zone de masquage 8 au niveau de la bretelle de masquage 12 de cette première variante de réalisation comprend une première couche 9 réalisée à partir du premier matériau plastique et située sur une face externe du panneau d'habillage 6 et une deuxième couche 10 réalisée à partir du deuxième matériau plastique et située sur une face interne du panneau d'habillage 6. Grâce à cette configuration, la rigidité générale du panneau d'habillage 6 est diminuée, notamment par rapport à l'art antérieur qui comprend au niveau des zones de masquage 8 une double couche de matériaux rigides. La bretelle de masquage 12 selon cette première variante de réalisation forme une zone de liaison entre deux zones de transmission de lumière 7, ces dernières ont ainsi une plus grande liberté de mouvement l'une par rapport à l'autre, ce qui améliore la tenue mécanique aux chocs du panneau d'habillage 6.

La figure 8B représente une deuxième variante de réalisation du troisième mode de réalisation. De manière similaire à la deuxième variante du premier mode de réalisation, la deuxième variante de réalisation diffère de la première variante de réalisation du troisième mode de réalisation en ce que la première couche 9 présente au moins un évidement 11 diminuant localement l'épaisseur de la première couche 9, au moins une partie de la deuxième couche 10 étant agencée dans cet évidement 11. Dans le cas présent, cet évidement 11 est situé dans le plan de coupe ZZ. Cet évidement 11 permet de diminuer localement la rigidité de la nervure de masquage 12.

La figure 8C représente une troisième variante de réalisation du troisième mode de réalisation. De manière similaire à la troisième variante du premier mode de réalisation, la troisième variante de réalisation diffère de la première variante de réalisation du troisième mode de réalisation en ce que la zone de masquage 8 formée par la bretelle de masquage 12 est réalisée entièrement à partir du deuxième matériau plastique. Autrement dit, par rapport à la première variante de réalisation du troisième mode de réalisation, la zone de masquage 8 formée par la bretelle de masquage 12 ne comprend pas la première couche 9 mais uniquement la deuxième couche 10. Cette configuration augmente de façon très nette la souplesse de la zone de masquage 8 formée par la bretelle de masquage 12 de sorte que cette zone est plus souple que la zone de transmission de lumière 7. Cette souplesse permet de diminuer la rigidité d'ensemble du panneau d'habillage 6 de sorte que la tenue mécanique aux chocs du panneau d'habillage 6 est améliorée. La souplesse de la bretelle de masquage 12 qui sépare deux zones de transmission de lumière 7 lui permet de remplir une fonction similaire à celle d'une charnière entre ces deux zones de transmission de lumière 7 en permettant à celles-ci de se déplacer plus librement l'une par rapport à l'autre, ce qui diminue la rigidité générale du panneau d'habillage 6 et donc améliore la tenue mécanique aux chocs du panneau d'habillage 6.

Avantageusement, on peut prévoir que les bretelles de masquage 12 forment des saillies sur une face interne du panneau d'habillage 6 de manière à remplir une fonction de masque destiné à limiter de potentielles fuites de lumière, par exemple en provenance des unités optiques 5.

L'invention n'est pas limitée aux modes de réalisation présentés et d'autres modes de réalisation apparaîtront clairement à l'homme du métier. Il est notamment possible de prévoir de combiner les unes avec les autres les différentes variantes au sein d'un même mode de réalisation ou de combiner les unes avec les autres les différentes variantes des différents modes de réalisation.

Le panneau d'habillage 6 selon l'invention est présenté ci-dessus dans le cadre de son intégration dans une face avant 2 de véhicule automobile 1. On peut prévoir qu'un panneau d'habillage 6 selon l'invention soit intégré à l'arrière du véhicule, par exemple sur un hayon du véhicule automobile.

### Liste de références

1 : véhicule automobile
2 : face avant
3 : module d'habillage
4 : panneau principal de la face avant
5 : unité optique
6 : panneau d'habillage
7 : zone de transmission
8 : zone de masquage
9 : première couche de la zone de masquage
10 : deuxième couche de la zone de masquage
11 : évidement
12 : bretelle de masquage

## Revendications

1. Panneau d'habillage (6) pour véhicule automobile (1), **caractérisé en ce qu'**il comprend :
- au moins une zone de transmission de lumière (7), réalisée en un premier matériau plastique apte à permettre une transmission lumineuse,
- au moins une zone de masquage (8) contiguë à la zone de transmission de lumière (7) et réalisée au moins en partie en un deuxième matériau plastique plus souple que le premier matériau plastique.

2. Panneau d'habillage (6) selon la revendication 1, dans lequel le deuxième matériau plastique est opaque à la lumière visible.

3. Panneau d'habillage selon la revendication 1, dans lequel le deuxième matériau plastique est semi-transparent.

4. Panneau d'habillage selon la revendication 1, dans lequel le deuxième matériau plastique est translucide, la transmittance lumineuse du deuxième matériau plastique étant inférieure à la transmittance lumineuse du premier matériau plastique.

5. Panneau d'habillage (6) selon l'une quelconque des revendications 1 à 4, dans lequel la zone de masquage (8) est plus souple que la zone de transmission de lumière (7).

6. Panneau d'habillage (6) selon l'une quelconque des revendications précédentes, dans lequel la zone de masquage (8) est réalisée entièrement à partir du deuxième matériau plastique.

7. Panneau d'habillage (6) selon l'une quelconque des revendications 1 à 5, dans lequel la zone de masquage (8) est formée d'au moins deux couches de matériaux :
- une première couche (9) réalisée à partir du premier matériau plastique et située au moins sur une face externe du panneau d'habillage (6), et
- une deuxième couche (10) réalisée à partir du deuxième matériau et située au moins sur une face interne du panneau d'habillage (6).

8. Panneau d'habillage (6) selon la revendication 7, dans lequel la première couche (9) est venue de matière avec le premier matériau plastique formant la zone de transmission de lumière (7).

9. Panneau d'habillage (6) selon la revendication 7 ou 8, dans lequel la première couche (9) présente au moins un évidement (11) diminuant localement l'épaisseur de la première couche (9), au moins une partie de la deuxième couche (10) étant agencée dans cet évidement (11).

10. Panneau d'habillage (6) selon l'une quelconque des revendications précédentes, dans lequel la zone de masquage (8) s'étend sur tout le pourtour de la zone de transmission de lumière (7).

11. Panneau d'habillage (6) selon l'une quelconque des revendications précédentes, dans lequel le panneau d'habillage (6) forme un boitier, au moins une partie de la zone de masquage (8) formant au moins une des parois latérales du boitier et la zone de transmission de lumière (7) formant au moins une partie d'un fond du boitier.

12. Panneau d'habillage (6) selon l'une quelconque des revendications précédentes, dans lequel au moins une partie de la zone de masquage (8) sépare deux zones de transmission de lumière (7).

13. Panneau d'habillage (6) selon l'une quelconque des revendications précédentes, dans lequel le premier matériau plastique est 5 à 15 fois plus souple que le deuxième matériau plastique.

14. Module d'habillage (3) pour véhicule automobile (1), **caractérisé en ce qu'**il comprend un panneau d'habillage (6) selon l'une quelconque des revendications précédentes.

15. Face avant (2) de véhicule automobile (1) comprenant un panneau d'habillage (6) selon l'une quelconque des revendications 1 à 13.

16. Véhicule automobile (1) comprenant un panneau d'habillage (6) selon l'une quelconque des revendications 1 à 13.
